Europäisches Patentamt

European Patent Office

Office européen des brevets

(19)

(11) Publication number: **0 205 065 B1**

(12) **EUROPEAN PATENT SPECIFICATION**

(45) Date of publication of patent specification: **06.03.91** (51) Int. Cl.⁵: **G01N 21/61**, G01N 21/35, G02B 26/04

(21) Application number: **86107465.6**

(22) Date of filing: **02.06.86**

(54) Apparatus for intermitting light beams for use in gas analyzer.

(30) Priority: **04.06.85 JP 85106/85 U**

(43) Date of publication of application:
**17.12.86 Bulletin 86/51**

(45) Publication of the grant of the patent:
**06.03.91 Bulletin 91/10**

(84) Designated Contracting States:
**DE FR**

(56) References cited:
**DE-A- 2 420 578**
**GB-A- 2 116 317**
**GB-A- 2 146 117**
**US-A- 3 932 754**
**US-A- 4 004 146**

(73) Proprietor: **HORIBA, LTD.**
**2 Miyanohigashi-machi Kissyoin**
**Minami-ku Kyoto(JP)**

(72) Inventor: **Miyatake, Kimio 2-205, Takano**
**Jyutaku No. 2**
**1-7 Takano-Higashihiraki-Cho**
**Sakyo-ku Kyoto(JP)**
Inventor: **Takeda, Kenji**
**100 Banchi, Kuze-Ohyabu-Cho**
**Minami-ku Kyoto(JP)**

(74) Representative: **TER MEER - MÜLLER - STEIN-
MEISTER & PARTNER**
**Mauerkircherstrasse 45**
**W-8000 München 80(DE)**

## Description

The present invention relates to an apparatus for intermitting a light beam bundle e.g. a sample beam bundle and a reference beam bundle in a gas analyzer such as a nondispersive infrared gas analyzer.

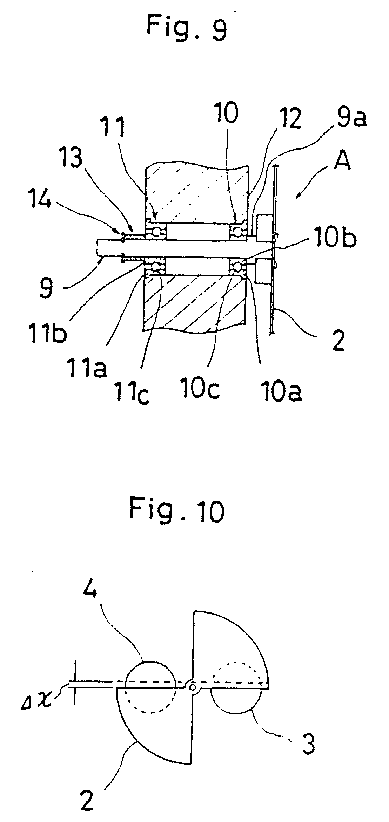

A known apparatus for intermitting beams of light for use in a gas analyzer A, in which two ball bearings 10, 11 support a rotary shaft 9 of a chopper 2, is shown in Fig. 9. 10a, 11a designate outside rings fixedly mounted on a bearing housing 12 by means of adhesives and the like. 10b, 11b designate inside rings, both the inside rings 10b, 11b being prevented from moving outward relative to the rotary shaft 9 by a larger-diameter portion of the rotary shaft 9, a fixing spacer 13 and a fixing ring 14.

For example, in an infrared gas analyzer, in general the quantity of a beam of light incident upon a sample cell and that incident upon a reference cell are balanced, an alternative electric signal is generated by intermitting the beam bundle by a chopper, and this alternative electric signal is converted into a gas-concentration signal. In this case, if a bearing of the chopper has a play in the thrust direction or the radial direction, this play appears in the form of shake movement $\Delta x$ of a shaft of the chopper 2, as shown in Fig. 10, and as a result, a difference is produced between the quantity of a beam of light incident upon the cell 3 and that incident upon the cell 4 with the result of a noise reducing the measuring accuracy. Accordingly, a precision ball bearing has been used for said ball bearings 10, 11 in many cases. However, even in this case, there is a clearance of several microns between the outside rings and the inside rings and the balls 10c, 11c. This minute clearance leads to a shake movement of the shaft of the chopper 2 which leads to a noise signal.

The present invention aims at the elimination of the above described disadvantages of an apparatus for intermitting beams of light for use in a gas analyzer and the provision of an apparatus for intermitting beams of light for use in a gas analyzer in which a modulation noise generated due to a shake movement of the shaft of a chopper when a beam bundle is intermitted is avoided or at least considerably reduced.

In order to achieve the above described object, an apparatus is provided, according to Claim 1.

With the claimed construction, a pressure of the thrust direction due to the elastic member is always given to the movable outside ring or inside ring of said other one of said ball bearings, whereby said outside ring or inside ring is maintained biassed in the thrust direction relative to an inside ring or outside ring opposite to said outside ring or inside ring. Also, since the pressure in the thrust direction due to the elastic member is transmitted to the inside ring of said one of ball bearings through the rotary shaft, also the inside ring and the outside ring of said ball bearing are maintained biassed to each other. And, since a ball-receiving surface of each of the inside rings and outside rings is bent in a spherical shape, the ball is maintained so as to be pressed against the bent portion of the inside rings and outside rings, thereby a play in the thrust direction and the radial direction between the bent surface of the inside rings and the outside rings and the balls can be eliminated.

Accordingly, a shake movement of the shaft of the chopper is eliminated, and the modulation noise generated when a beam bundle is intermitted is reduced and the measuring accuracy is improved.

Embodiments of the invention are described in the following with reference to the accompanying drawings.

Fig. 1    is a block diagram showing the general structure of an example of a nondispersive infrared gas analyzer;

Fig. 2    is a sectional view showing a bearing structure of an apparatus for intermitting beams of light;

Fig. 3    is a-disintegrated perspective view showing a bearing structure of an apparatus for intermitting beams of light of Fig. 2;

Fig. 4    is an enlarged sectional view showing the principal parts;

Fig. 5    is a sketch showing a bearing structure of an apparatus for intermitting beams of light of Fig. 2;

Figs. 6    to 8 are sketches showing another embodiment of the present invention, respectively; and

Figs. 9    , 10 show constructional features of a conventional bearing arrangement of a chopper.

The preferred embodiment of the present invention will be described below with reference to the drawings.

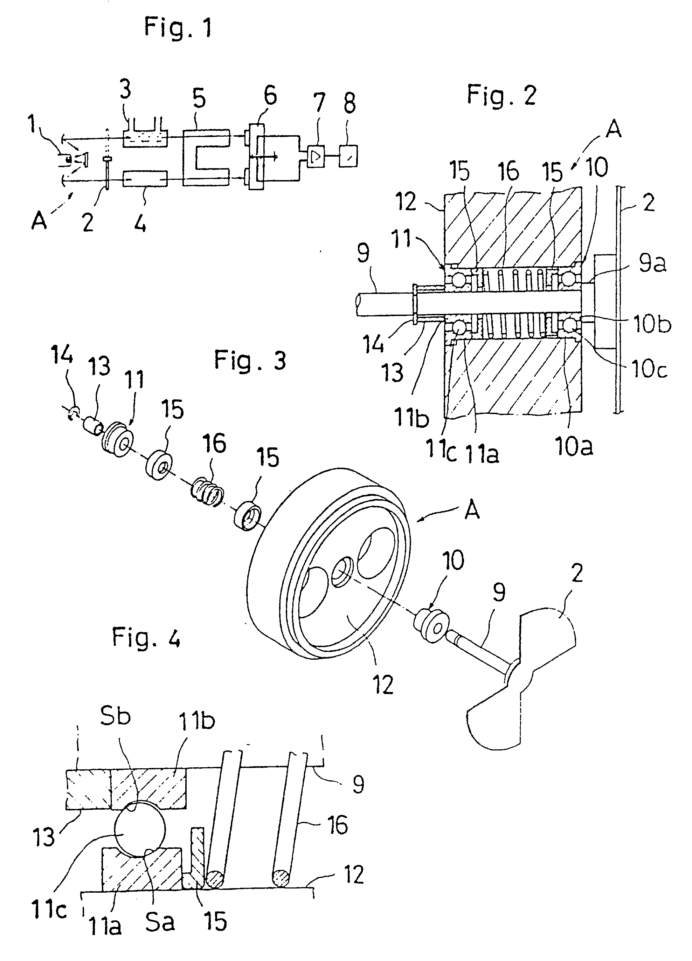

Referring now to Fig. 1, reference numeral 1 designates a source of light, 2 a chopper of an apparatus for intermitting beams of light A, 3 a sample cell, 4 a reference cell, 5 an interference filter cell, 6 a condenser microphone detector, 7 an amplifier, and 8 an indicator.

As to the bearing structure of an apparatus for intermitting beams of light in Figs. 2 to 5 reference numeral 9 designates a rotary shaft of the chopper 2 driven by a motor (not shown) and supported by two ball bearings 10, 11. An outside ring 10a of one ball bearing 10 arranged on the chopper 2 side is fixedly mounted on a bearing housing 12 by means of adhesives and the like so that a shift movement of an inside ring 10b toward the chopper 2 side is prevented by a larger-diameter portion 9a of the rotary shaft 9. An outside ring 11a of the other ball bearing 11 is inserted in the bearing housing movably in the thrust direction. The movement of an inside ring 11b of said ball bearing 11 toward an outside (in the direction opposite to the chopper 2) is prevented by a fixing spacer 13 and a fixing ring 14.

A spring shoe 15, 15 which is engaged with a side of the outside ring 10a, 11a, respectively, and a coil spring 16 which is inserted between the spring shoes 15, 15 in a compressed manner, are provided between said both ball bearings 10, 11 to bias said movable outside ring 11a outward. Instead of said spring 16, a rubber member may be used as an elastic member.

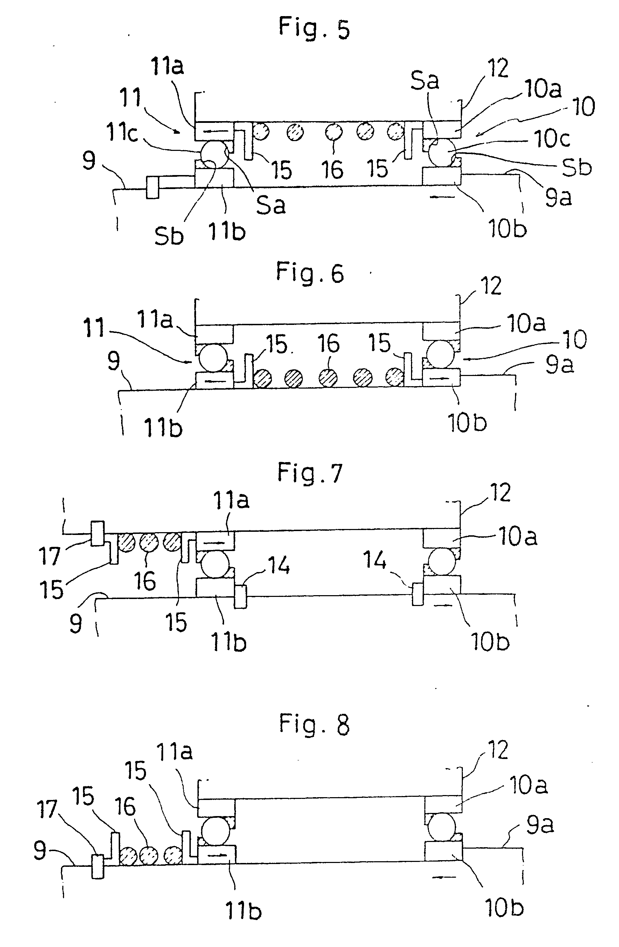

Nextly, the operation of an apparatus for intermitting beams of light constructed in the above described manner is described with reference to Figs. 4, 5.

Since the outside ring 10a of the ball bearing 10 is fixedly mounted in the bearing housing 12, the outside ring 11a of the other ball bearing 11 is pressed outward by the pressure of the spring 16, and is thereby biassed toward the inside ring 11b, as shown in Fig. 4. As a result, the ball 11c is pressed by the bent surface portion Sa of the outside ring 11a so that the bent surface portion Sb of the inside ring 11b may be pressed by the ball 11c, thereby the clearance of the thrust direction and radial direction becomes remarkably small.

Also, since the outward movement of the inside ring 11b relative to the rotary shaft 9 is prevented by the fixing spacer 13 and the fixing ring 14, the rotary shaft 9 is pressed leftward as seen in Fig. 5 and the inside ring 10b of said one ball bearing 10 is pressed by the larger-diameter portion 9a of the rotary shaft 9, as shown in Fig. 5, so that the bent surface portion Sa of the outside ring 10a, the ball 10c and the bent surface portion Sb of the inside ring 10b are pressed to each other, thereby the clearance in the thrust direction and the radial direction becomes remarkably small.

Accordingly, the shake movement of the shaft of the chopper 2 due to a play in the ball bearings 10, 11 can be eliminated and a modulation noise generated when a beam of light is intermitted can be reduced and the measuring accuracy is improved.

Figs. 6 to 8 show another embodiment of the present invention.

The preferred embodiment shown in Fig. 6 is characterized in that the outside rings 10a, 11a of both ball bearings 10, 11, are fixedly mounted on a bearing housing, the movement of the inside ring 10b of the one ball bearing 10 in one direction relative to the rotary shaft 9 being prevented by a larger-diameter portion 9a. The inside ring 11b of the other ball bearing 11 is movable in the thrust direction, and the spring shoes 15, 15 abut against a side of both inside rings 10b, 11b. A coil spring 16, which is inserted between the spring shoes 15, 15 in a compressed manner, exerts a bias force between both inside rings 10b, 11b, whereby the movable inside ring 11b is movably biassed outwardly.

Another preferred embodiment is shown in Fig. 7 and is characterized in that an outside ring 11a which is adapted to be movable in the thrust direction is pressed from outside by a coil spring 16 inserted between said outside ring 11a and the bearing housing 12. The inward movement of inside rings 10b, 11b relative to a rotary shaft 9 is prevented by fixing rings 14 and the like. 17 designates a fixing ring for a spring shoe 15.

A further preferred embodiment shown in Fig. 8 is characterized in that an inside ring 11b which is adapted to be movable in thrust direction is pressed from outside by a coil spring 16 inserted between said inside ring 11b and the rotary shaft 9.

## Claims

1. An apparatus for intermitting beams of light for use in a gas analyzer, with a rotary shaft (9) of a chopper (2) being supported by two ball bearings (10, 11), an outside ring (10a) of one ball bearing (10) being fixedly mounted in a bearing housing (12), **characterized** in that an outside ring (11a) or an inside ring (11b) of the other ball (11) bearing is adapted to be movable in the thrust direction relative to said bearing housing (12) or said rotary shaft (9) and movably biassed in the thrust direction relative to said shaft (9) by an elastic member (16).

2. The apparatus as set forth in claim 1, **characterized** in that said elastic member is a spring (16) and the spring is inserted between said two ball bearings (10, 11; see Fig. 5, 6).

3. The apparatus as set forth in claim 2, **characterized** in that said spring (16) is provided outside said ball bearing (11; see Fig. 7, 8) which is not fixed.

## Revendications

1. Dispositif pour la production de rayons lumineux intermittents destinés à un analyseur de gaz, comportant un arbre rotatif (9) d'un modulateur (2) supporté par deux paliers à billes (10, 11), une bague extérieure (10a) de l'un des paliers à billes (10) étant montée fixe dans un flasque-palier (12), caractérisé en ce qu'une bague extérieure (lia) ou une bague intérieure (11b) de l'autre palier à billes (11) est apte à pouvoir être déplacée dans la direction de poussée par rapport audit flasque-palier (12) ou audit arbre rotatif (9) et est sollicitée en déplacement dans la direction de poussée par rapport audit arbre (9) par un élément élastique (16).

2.  Dispositif selon la revendication 1, caractérisé en ce que ledit élément élastique est un ressort (16) qui est inséré entre lesdits deux paliers à billes (10, 11) (voir Figures 5, 6).

3.  Dispositif selon la revendication 2, caractérisé en ce que ledit ressort (16) est prévu à l'extérieur dudit palier à billes (11) (voir Figures 7, 8) qui n'est pas fixe.

## Ansprüche

1.  Einrichtung zur Unterbrechung von Lichtstrahlen für einen Gasanalysierer mit einer drehenden Welle (9) eines Choppers (2), die durch zwei Kugellager (10, 11) abgestützt ist, wobei ein Außenring (10a) eines der Kugellager (10) in einem Lagergehäuse(12)fixiert gehalten ist, **dadurch gekennzeichnet**, daß ein Außenring (11a) oder ein Innenring (11b) des anderen Kugellagers (11) in Belastungrichtung relativ zum Lagergehäuse (12) oder zur Welle (9) beweglich und in Belastungsrichtung relativ zur Welle (9) unter vorspannung durch ein elastisches Glied (16) steht.

2.  Einrichtung nach Anspruch 1, **dadurch gekennzeichnet**, daß das elastische Glied eine Feder (16) ist, die zwischen die beiden Kugellager (10, 11; siehe Fig. 5,6) eingesetzt ist.

3.  Einrichtung nach Anspruch 2, **dadurch gekennzeichnet**, daß die Feder (16) außerhalb desjenigen Kugellagers (11; siehe Fig. 7, 8) angeordnet ist, welches nicht fixiert ist.

Fig. 1

Fig. 2

Fig. 3

Fig. 4

## Fig. 5

## Fig. 6

## Fig. 7

## Fig. 8

Fig. 9

Fig. 10